# EUROPÄISCHE PATENTANMELDUNG

(11) **EP 4 591 964 A1**
(43) Veröffentlichungstag der Anmeldung: **30.07.2025**
(21) Anmeldenummer: 24153445.2
(22) Anmeldetag: 23.01.2024
(51) Int. Cl.: B01D 39/16

(54) **FILTER MIT FILTERELEMENT UND VERFAHREN ZUR HERSTELLUNG EINES FILTERELEMENTS**

(71) Anmelder: SEKA Umwelttechnik GmbH, 76829 Landau (DE)
(72) Erfinder: MÜLLER, Stefan, 45739 Oer-Erkenschwick (DE)
(74) Vertreter: Patentanwälte Dr. Keller, Schwertfeger Partnerschaft mbB

(57) **Zusammenfassung**

Die vorliegende Erfindung betrifft einen Filter umfassend ein Filterelement (10) mit einem Adsorptionsmittel, wobei das Filterelement (10) ein Filtermedium (12; 112, 212) umfasst und das Filtermedium (12; 112, 212) eine luftdurchlässige, ungeordnete dreidimensional Gerüststruktur (18; 118; 218; 326) mit einer Vielzahl fadenartiger Abschnitte (22, 22a, 22b, 22c, 22d) aufweist, wobei jeder fadenartige Abschnitt (22, 22a, 22b, 22c, 22d) zwei entgegengesetzt liegende Enden aufweist und an wenigstens einem Ende über einen Kontaktpunkt verfügt, wobei das Adsorptionsmittel eine Vielzahl von Adsorptionspartikeln (20, 20a, 20b, 20c, 20d) umfasst, und wobei wenigstens eine Teilmenge der Vielzahl von Adsorptionspartikeln (20, 20a, 20b, 20c, 20d; 318) an wenigstens einem fadenartigen Abschnitt (22, 22a, 22b, 22c, 22d) im Innern der Gerüststruktur (18; 118; 218; 326) fest anhaftet.

Ferner betrifft die Erfindung ein Verfahren zur Herstellung eines solchen Filters.

## Beschreibung

Die vorliegende Erfindung betrifft einen Filter sowie eine Vorrichtung und ein Verfahren zur Herstellung eines solchen Filters.

Filter werden beispielsweise als Luftfilter in Fahrzeugen eingesetzt, um von außen in die Fahrzeugkabine einströmende Luft zu filtern. Es handelt sich hier speziell um sogenannte Innenraumfilter. Bei diesen Innenraumfiltern werden unter anderem reine Faserfilter mit Vlies- und/oder Papiermembranen oder Filter, in denen zusätzlich zu den Faserfiltern Aktivkohlekomponenten enthalten sind, eingesetzt. Bei der zuletzt genannten Filterart wirkt die Aktivkohle als Adsorptionsmittel.

Reine Faserfilter dienen dazu grobe Verunreinigungen wie etwa Staubpartikel oder Insekten aus der Luft zu filtern.

Bei Filtern, die neben den Vlies- und/oder Papiermembranen Aktivkohlekomponenten enthalten, wird mit Hilfe der Aktivkohlekomponenten die durch den Filter strömende Luft zusätzlich auf physikalischem und/oder chemischem Weg gereinigt, indem sich die Verunreinigungen an den Aktivkohlekomponenten anlagern. Ein Filter mit Aktivkohlekomponenten ist in der Lage, giftige Schadstoffe wie etwa Schwefel oder giftige organische Substanzen aus der Luft herauszufiltern.

Der Vorteil der Verwendung von Aktivkohle als Adsorptionsmittel liegt darin, dass Aktivkohle eine sehr poröse Struktur und eine damit verbundene große innere Oberfläche aufweist. Aktivkohle kann somit eine vergleichsweise große Menge an Schadstoffen adsorbieren. Bei Aktivkohle handelt es sich in der Regel um Materialbruchstücke, die in einer weiteren Verarbeitung gemahlen oder gepresst werden können. Sowohl die Materialbruchstücke als auch die gemahlene oder gepresste Aktivkohle können in Filtern verwendet werden.

So gibt es eine Reihe verschiedener Verfahren, um Filter mit Aktivkohle herzustellen. Beispielsweise wird Aktivkohle in ein Gehäuse geschüttet. Diese Art von Aktivkohlefilter eignet sich für den Einsatz in unbeweglichen Vorrichtungen, jedoch nicht in Vorrichtungen, die Erschütterungen ausgesetzt sind, wie einem Fahrzeug. Wird eine Schüttung von Aktivkohle regelmäßig erschüttert, wird sich die Aktivkohle im Laufe der Zeit immer weiter setzen und somit lokal verdichten. Darüber hinaus reiben die Aktivkohlepartikel aneinander, was dazu führt, dass diese sich nach und nach zu Staub vermahlen. Es würden dadurch in dem Filter Bereiche mit unterschiedlicher Luftdurchlässigkeit entstehen, wodurch der Filter seine kontrollierte Wirkung verliert.

Mithilfe von Extrudern kann Aktivkohle in eine rüttelfeste Form gebracht werden. Alternativ kann Aktivkohle, insbesondere gemahlene Aktivkohle fest verpresst werden, so dass sie rüttelfest ist. Wenn auch diese Aufbereitungsform der Aktivkohle in Innenraumfiltern für Fahrzeuge eingesetzt werden kann, hat diese Aufbereitungsform den Nachteil, dass die Luftdurchlässigkeit vergleichsweise schlecht ist und ein Filter mit einer so aufbereiteten Aktivkohle einen unerwünscht hohen Druckverlust hat. Deshalb werden in diese extrudierten oder gepressten Aktivkohlegebilden entsprechende Luftkanäle eingefügt. Zusätzlich kann diese Struktur mithilfe von Bindern fixiert werden. Alternativ werden diese gepressten oder extrudierten Aktivkohlegebilde zerteilt und in eine übergeordnete Filterstruktur z.B. eine Wabenstruktur eingearbeitet. Diese Verfahren sind vergleichsweise aufwändig.

Darüber hinaus sind Filtereinrichtungen bekannt, die schichtweise aufgebaut sind, wobei jede einzelne Schicht eine Lage Aktivkohle aufweist, die auf einem textilen Trägermedium wie beispielsweise Vlies mittels eines Klebstoffes fixiert ist. Diese Art von Filter besteht somit aus mehreren Schichten Aktivkohle und Vlies.

Diese zuletzt genannte Art von Filtern, bei denen eine Lage Aktivkohle auf einem textilen Träger fixiert ist, ist in der Regel rüttelfest, so dass diese bei Vorrichtungen die Erschütterungen ausgesetzt sind, wie etwa Fahrzeuge, eingesetzt werden können. Mit Hilfe der Aktivkohle werden in der Umgebung enthaltene Schadstoffe herausgefiltert. Die Anwendung dieses Filters liegt somit vor allem bei Kraftfahrzeugen, die sich in normalen Umgebungsbedingungen bewegen.

Bei Anwendungen, bei denen mit einer hohen Schadstoffbelastung zu rechnen ist, ist es notwendig, den Anteil der Aktivkohle zu erhöhen. Für einen Filter mit einer Lage Aktivkohle auf einem textilen Träger bedeutet dies, dass die Anzahl der Lagen erhöht werden muss, um eine ausreichende Standzeit des Filters zu gewährleisten. Dadurch wird die Herstellung dieser Filter sehr aufwändig. Darüber hinaus benötigen Filter, die auf diese Weise hergestellt sind, für Anwendungen in stark schadstoffbelasteten Umgebungen viel Raum.

Insbesondere bei Baumaschinen oder bei landwirtschaftlichen Fahrzeugen, die in einer Umgebung mit starker Schadstoffbelastung eingesetzt werden, sind diese Filter aus Kosten- und Platzgründen daher nachteilig.

Es ist Aufgabe der vorliegenden Erfindung, einen Filter mit einem Adsorptionsmittel, insbesondere einen Innenraumfilter für Fahrzeuge bereitzustellen, der kompakt ausgebildet ist und auch in Umgebung mit starker Schadstoffbelastung zuverlässig eine schadstoffbelastete Luft reinigt. Darüber hinaus sollte die Standzeit des Filters mit bisher bekannten Filtern vergleichbar sein.

Insbesondere ist es Aufgabe der vorliegenden Erfindung, einen Filter mit einem Adsorptionsmittel, insbesondere einen Innenraumfilter mit Adsorptionsmittel bereitzustellen, der für den Einsatz in Baumaschinen und landwirtschaftlichen Fahrzeugen geeignet ist.

Erfindungsgemäß wird die Aufgabe gelöst durch einen Filter umfassend ein Filterelement mit einem Adsorptionsmittel, wobei das Filterelement ein Filtermedium umfasst, das eine luftdurchlässige, ungeordnete dreidimensionale Gerüststruktur mit einer Vielzahl fadenartiger Abschnitte aufweist, wobei jeder fadenartige Abschnitt zwei entgegengesetzt liegende Enden aufweist und an wenigstens einem Ende über einen Kontaktpunkt verfügt, wobei das Adsorptionsmittel eine Vielzahl von Adsorptionspartikeln umfasst, und wobei wenigstens eine Teilmenge der Vielzahl von Adsorptionspartikeln an wenigstens einem fadenartigen Abschnitt in Innern der Gerüststruktur fest anhaftet.

Ein fadenartiger Abschnitt kann somit entweder über zwei entgegengesetzt liegende Kontaktpunkte oder über einen Kontaktpunkt an einem Ende des fadenartigen Abschnitts und über ein freies Ende an dem dem Kontaktpunkt entgegengesetzt liegenden Ende des fadenartigen Abschnitts aufweisen.

Zwischen den Adsorptionspartikeln und den fadenartigen Abschnitten besteht hierbei insbesondere eine stoffschlüssige Verbindung wie etwa eine Klebeverbindung.

Die Teilmenge kann ein oder mehrere Adsorptionspartikel umfassen.

Da die Gerüststruktur luftdurchlässig ist, lässt sich somit über die Art des Gerüstes und die Menge bzw. Masse und Größe der anhaftenden Adsorptionspartikel der Druckverlust durch das Filtermedium sowie die Adsorptionsfähigkeit des Filtermediums wunschgemäß einstellen. Insbesondere ergibt sich dadurch die Möglichkeit, kompakte Filtermedien mit einem hohen Anteil an Adsorptionspartikeln bei vergleichsweise geringem Druckverlust herzustellen. Der Vorteil einer ungeordneten Struktur liegt darin, dass sie vergleichsweise einfach und schnell herzustellen ist.

Um ein möglichst kompaktes Filtermedium bereitstellen zu können, ist es von Vorteil, dass die Gerüststruktur dreidimensional ist. Hierdurch lassen sich Filtermedien erzeugen, die aus mehr als einer Lage Aktivkohle bestehen. Die Schichtdicke des Filtermediums kann dadurch an die räumlichen Anforderungen des gewünschten Einsatzes angepasst werden. Darüber hinaus lassen sich mit Hilfe einer dreidimensionale Gerüststruktur Filtermedien mit einer vergleichsweise großen Aktivkohleschicht herstellen, was wiederum zu längeren Standzeiten des Filtermediums führt.

Mit Hilfe dieses Filtermediums lassen sich somit Filter herstellen, die als Innenraumfilter für Fahrzeuge dienen, die in schadstoffbelasteter Umgebung eingesetzt werden, wie etwa Baufahrzeuge oder landwirtschaftliche Fahrzeuge während des Ausbringens von Pestiziden.

Hierbei ist es von besonderem Vorteil, dass die Gerüststruktur selbsttragend ist.

Dies kann beispielsweise dadurch erreicht werden, dass sämtliche fadenartigen Abschnitte oder nur ein Teil der Vielzahl der fadenartigen Abschnitte elastisch sind, so dass eine stabile, selbsttragende aber dennoch elastische Gerüststruktur entsteht.

Alternativ können sämtliche fadenartigen Abschnitte oder nur ein Teil der Vielzahl der fadenartigen Abschnitte steif sein, so dass die Gerüststruktur ein sehr hohes Elastizitätsmodul aufweist und insbesondere steif und dadurch selbsttragend ist.

Bei einer bevorzugten Ausführungsform weist die Gerüststruktur wenigstens zwei fadenartige Abschnitte mit jeweils einem Kontaktpunkt auf, wobei die wenigstens zwei fadenartigen Abschnitte an den Kontaktpunkten zur Ausbildung eines Knotenpunkts fest miteinander verbunden sind. Die fadenartigen Abschnitte können hierbei mittels einer stoffschlüssigen Verbindung miteinander verbunden sein, insbesondere miteinander verklebt sein.

Dies führt zu einer besonders stabilen selbsttragenden, insbesondere steifen Gerüststruktur. Eine solche Gerüststruktur hat den Vorteil, dass auch bei extremen äußeren Einflüssen beispielsweise starken Vibrationen des Fahrzeugs das Filtermedium seine Form beibehält und sich die Strömungsverhältnisse im Filter nicht ändern.

Je nach Anforderungen an den Filter und Einsatzort des Filters kann die Gerüststruktur eine unterschiedliche Siebweite aufweisen. Vorzugsweise weist die Gerüststruktur eine Siebweite von 0,1 um bis 5,0 mm auf.

Es hat sich als besonders vorteilhaft erwiesen, dass die fadenartigen Abschnitte einen Durchmesser von 5,0 mm bis 5 nm (5 Nanometer) aufweisen. Die fadenartigen Abschnitte können prinzipiell alle den gleichen Durchmesser aufweisen. Es ist jedoch von Vorteil, dass zumindest einige der Vielzahl der fadenartigen Abschnitte unterschiedliche Durchmesser aufweisen. Darüber hinaus können die fadenartigen Abschnitte alle die gleiche Länge aufweisen. Auch hier ist es jedoch von Vorteil, dass zumindest einige der fadenartigen Abschnitte unterschiedliche Längen aufweisen. Die für die fadenartigen Abschnitte zulässige Länge wird durch die vorgegebene Siebweite des Filtermediums festgelegt und liegt beispielsweise im Bereich von 1,0 µm bis 5,0 mm. Dadurch, dass zumindest ein Teil der Vielzahl fadenartiger Abschnitte, vorzugsweise alle fadenartigen Abschnitte, innerhalb eines vorgegebenen Bereichs variable Längen und Dicken aufweisen können, vereinfacht sich das Herstellungsverfahren.

Die einzelnen fadenartigen Abschnitte können mittels eines Endlosfadens oder mittels einer Vielzahl von Fäden gleicher oder unterschiedlicher Länge hergestellt sein. Die Unterteilung des Endlosfadens oder der Vielzahl von Fäden in fadenartige Abschnitte ergibt sich aufgrund des Herstellverfahrens, dadurch, dass der Endlosfaden sich mit sich selbst kreuzt bzw. die Vielzahl der Fäden sich mit sich selbst oder untereinander kreuzen. An den Kreuzungspunkten sind entweder Berührungspunkte oder Knotenpunkte ausgebildet.

Die Vielzahl der Adsorptionspartikel weist eine Vielzahl unterschiedlicher Korngrößen auf, wobei im Rahmen der Erfindung die Vielzahl der Adsorptionspartikel auch dieselbe Korngröße aufweisen können.

Bei einer bevorzugten Ausführungsform ist das Adsorptionsmittel Aktivkohle. Aktivkohle hat sich beim Einsatz in Filtern besonders bewährt. Vorzugsweise handelt es sich um gebrochene Aktivkohlepartikel.

Vorzugsweise ist die Gerüststruktur aus einem Klebstoff hergestellt und die Vielzahl der Adsorptionspartikel haftet an zumindest einem Teil der aus Klebstoff hergestellten Gerüststruktur an. Die Gerüststruktur kann somit sehr kompakt gehalten werden, da keine zusätzlichen Klebemittel notwendig sind. Darüber hinaus entfällt das Beschichten der Gerüststruktur und/oder der Adsorptionspartikel mit einem Klebstoff, was das Herstellungsverfahren vereinfacht. Es sei angemerkt, dass im Rahmen der Erfindung die Adsorptionspartikel zwar zusätzlich mit einem Klebstoff beschichtet oder mit Klebstoffanteilen versehen sein können. Allerdings ist dies nicht notwendig, so dass bei diesem Filtermedium auch unbearbeitete Adsorptionspartikel oder bearbeitete Adsorptionspartikel ohne Klebstoffanteile, wie etwa beschichtete oder imprägnierte Aktivkohlepartikel ohne Klebestoffanteile, verwendet werden können.

Bei der Wahl eines geeigneten Klebstoffs ist somit entscheidend, dass dieser einen flüssigen oder viskosen Zustand aufweist, in dem Fäden gebildet werden können, die dann aushärten.

Die mit den Adsorptionspartikeln verbundene Gerüststruktur bildet dadurch eine kompakte Gesamtstruktur aus. Darüber hinaus ist die so hergestellte Gerüststruktur einfach konfektionierbar, insbesondere trennbar, so dass Filtermedien gewünschter Größe hergestellt werden können. Dies hat den Vorteil, dass das Filtermedium einfach an unterschiedliche räumliche Gegebenheiten einer Filtervorrichtung eines Fahrzeugs angepasst werden können.

Die Dichte des Filtermediums lässt sich durch die Anzahl und/oder Dicke der fadenartigen Abschnitte sowie der Menge, Größe und/oder Dichte der Adsorptionspartikel variieren.

Zum Schutz der Gerüststruktur ist es von Vorteil, dass wenigstens eine Filterabdeckung vorgesehen ist. Die Filterabdeckung kann ebenfalls ein Filtermedium, beispielsweise ein textiles Filtermedium wie etwa ein Vlies oder ein Glasfaservlies sein, um grobe Verunreinigungen, wie etwa Staubpartikel zu filtern.

Des beschriebene Filtermedium eignet sich für die Reinigung von Gasen wie etwa Luft und Flüssigkeiten wie etwa Wasser.

Inhalt der vorliegenden Erfindung ist auch eine Vorrichtung und ein Verfahren zur Herstellung eines Filtermediums geeignet für den Einsatz in einem Filter nach einem der vorhergehenden Ansprüche.

Eine Vorrichtung zur Herstellung eines Filtermediums, welches für den Einsatz in einem Filter nach einem der Ansprüche 1 bis 10 geeignet ist, umfasst eine erste Düse geeignet für den Austrag von flüssigem oder viskosem Klebstoff sowie eine zweite Düse geeignet für den Austrag von Adsorptionspartikeln, wobei die erste Düse und die zweite Düse so unter einem Winkel ausgerichtet sind, dass der aus der ersten Düse austretende flüssige oder viskose Klebstoff und die aus der zweiten Düse austretenden Adsorptionspartikel in einen gemeinsamen Materialstrahl zusammengeführt werden, sowie eine Arbeitsfläche, auf die der gemeinsame Materialstrahl trifft, wobei die Arbeitsfläche und der gemeinsame Materialstrahl gegeneinander verschiebbar sind.

Beispielsweise kann die Arbeitsfläche auf einem Kreuztisch mit Z-Achse ausgebildet oder darauf angeordnet sein, wobei sich der Kreuztisch mit Z-Achse in alle drei Raumrichtungen XYZ bewegen kann. Der Kreuztisch und somit die Arbeitsfläche werden hierbei gegenüber der ersten Düse und der zweiten Düse verlagert, wobei die erste Düse und die zweite Düse unbeweglich sind. Zusätzlich können die erste Düse und die zweite Düse synchron gegenüber der Arbeitsfläche bewegt werden.

Bei einer alternativen Ausführungsform werden die erste Düse und die zweite Düse synchron gegenüber einer feststehenden Arbeitsfläche in alle drei Raumrichtungen XYZ bewegt.

Die Arbeitsfläche kann auf einer Tischfläche vorgesehen sein. Alternativ kann die Arbeitsfläche der Boden eines Filtergehäuses sein, so dass das Filtermedium direkt in dem Filtergehäuse hergestellt werden kann. Der Boden des Filtergehäuses kann hierbei zusätzlich mit einer Filterabdeckung versehen sein.

Bei einem bevorzugten Verfahren wird ein Strahl aus einem flüssigen oder viskosen Klebstoff erzeugt. Weiterhin wird ein Strahl mit Adsorptionspartikeln erzeugt, wobei der Strahl aus flüssigem oder viskosem Klebstoff und der Strahl mit den Adsorptionspartikeln zusammengeführt werden und der gemeinsame Materialstahl zumindest einen fadenartigen Abschnitt bildet, der steif aushärtet und an dem Adsorptionspartikel anhaften. Der Strahl mit den Adsorptionspartikeln kann beispielsweise mit Hilfe eines Luftstroms geführt werden.

Mit Hilfe des aus Klebstoff und Adsorptionspartikeln bestehenden gemeinsamen Materialstrahls lässt sich eine Gerüststruktur, vorzugsweise eine dreidimensionale Gerüststruktur aufbauen, an der Adsorptionspartikel befestigt, insbesondere verklebt sind.

Zur Ausbildung eines aus dem Filtermedium bestehenden geometrischen Körpers ist es von Vorteil, dass der aus flüssigem oder viskosem Klebstoff und Adsorptionspartikeln gebildete Materialstrahl ungeordnet auf einer vorgegebenen Arbeitsfläche abgelegt wird.

Vorzugsweise wird die Gerüststruktur schichtweise gebildet. Dies bietet die Möglichkeit ein Filtermedium mit unterschiedlichen Höhen zu erzeugen, so dass die Höhe des Filtermediums den gewünschten Anforderungen angepasst werden kann.

Beispielsweise kann der aus flüssigem Klebstoff und Adsorptionspartikeln gebildete Materialstrahl ungeordnet auf einer eckigen oder runden Fläche abgelegt werden und aushärten, so dass dann durch das schichtweise Auftragen weiterer Lagen des aus flüssigem oder viskosem Klebstoff und Adsorptionspartikeln gebildeten gemeinsamen Materialstrahls ein Filtermedium mit einer zylindrischen oder quaderförmigen Struktur entsteht.

Bei einer bevorzugten Weiterbildung ist eine Filterabdeckung vorgesehen, auf die der gemeinsame Materialstrahl aus flüssigem Klebstoff und Adsorptionspartikeln auftrifft, wobei vorzugsweise vor dem Auftreffen des gemeinsamen Materialstrahls aus flüssigem oder viskosem Klebstoff und Adsorptionspartikeln die Filterabdeckung mit einer Klebestoffschicht versehen wird. Die Filterabdeckung kann lediglich als Schutz für das Filtermedium ausgebildet sein. Es kann sich aber auch um ein textiles Filterelement, beispielsweise ein Vlies oder um ein Glasfaservlies handeln.

Zusätzlich oder alternativ wird eine Filterabdeckung mit einer Klebstoffschicht versehen, die mit der Klebstoffschicht nach unten auf die oberste Ebene der Gerüststruktur aufgelegt wird.

Somit können eine oder beide Seiten des Filtermediums mit einer Filterabdeckung versehen werden.

Die vorliegende Erfindung wird anhand der beigefügten Zeichnungen näher erläutert, in denen zeigen:
- Fig. 1: einen Querschnitt durch einen Teil eines Filters,
- Fig. 2: einen Ausschnitt des Filtermediums gemäß einer ersten Ausführungsform,
- Fig. 3: einen Ausschnitt des Filtermediums gemäß einer zweiten Ausführungsform,
- Fig. 4: einen Ausschnitt des Filtermediums gemäß einer dritten Ausführungsform,
- Fig. 5: eine Vorrichtung zur Herstellung des Filtermediums.

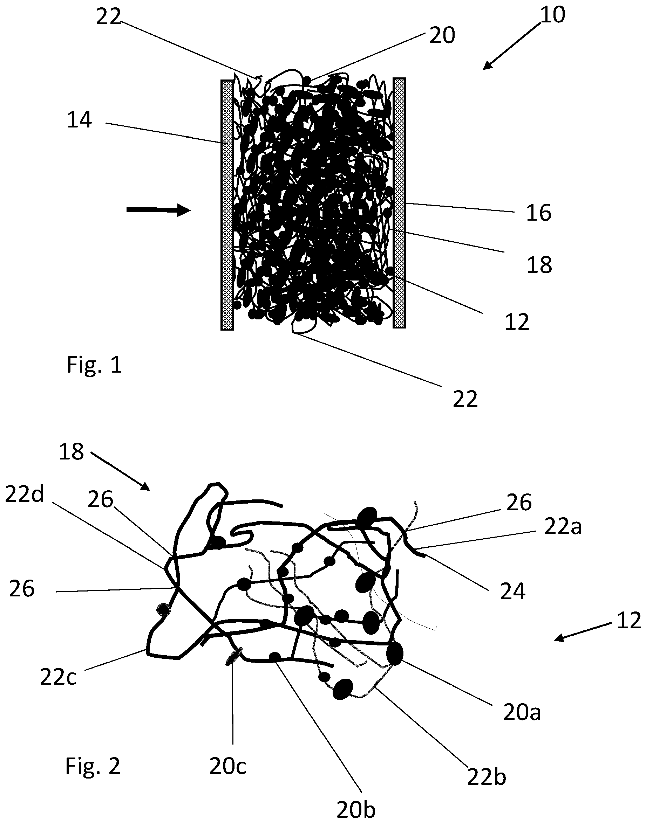

Figur 1 zeigt einen Querschnitt durch einen Teil eines Filters, nämlich einen Querschnitt durch ein Filterelement 10 mit einem Filtermedium 12, einer vorderen Abdeckung 14 und einer hinteren Abdeckung 16. Der Pfeil gibt die Richtung der Luftströmung an. Die Luft strömt somit zunächst durch die vordere Abdeckung 14, dann durch das Filtermedium 12 und anschließend durch die hintere Abdeckung 16. Der Filter umfasst, wenn auch nicht dargestellt ein Gehäuse, in dem das Filterelement eingebaut ist.

Die vordere Abdeckung 14 sowie die hintere Abdeckung 16 sind aus einem textilen Filtermaterial, beispielsweise aus einem Vlies, hergestellt. Insbesondere die vordere Abdeckung 14 dient dazu grobe Verunreinigungen aus der einströmenden Luft zu filtern.

Das Filtermedium 12 umfasst eine ungeordnete, wirre, selbsttragende Gerüststruktur 18, die luftdurchlässig ist, sowie Adsorptionspartikel 20, die an der Gerüststruktur 18 anhaften. Die Adsorptionspartikel 20 sind hierbei stoffschlüssig mit der Gerüststruktur 18 verbunden, insbesondere mit dieser verklebt.

Die Gerüststruktur 18 ist aus einem flüssigen oder viskosen Kunststoff hergestellt und sie verfügt über eine Vielzahl von steifen fadenartigen Abschnitten 22, die hier als Fadenabschnitte 22 bezeichnet werden.

Jeder Fadenabschnitt 22 weist zwei entgegengesetzt liegende Enden auf, wobei sich an wenigstens einem Ende ein Kontaktpunkt befindet. Das Ende des Fadenabschnitts 22, das dem mit dem Kontaktpunkt versehenen Ende entgegengesetzt liegt, verfügt entweder ebenfalls über einen Kontaktpunkt oder über ein freies Ende.

Die einzelnen Fadenabschnitte 22 sind an ihren Kontaktpunkten fest miteinander verbunden und bilden an den verbundenen Kontaktpunkten Kreuzungspunkte 26 aus (siehe Fig. 2). Die Kreuzungspunkte 26 entstehen wie weiter unten im Detail angegeben wird, in der Regel dadurch, dass ein Faden beispielsweise ein Endlosfaden oder ein längerer Faden aus einem Materialstrahl mit flüssigem oder viskosem Klebstoff aus unterschiedlichen Richtungen und Winkeln kommend auf sich selbst abgelegt wird und dann aushärtet. An den Kreuzungspunkten 26 verklebt der Materialstrahl mit flüssigem Klebstoff somit mit sich selbst.

Bei den Adsorptionspartikeln 20 handelt es sich um Aktivkohlepartikel unterschiedlicher Korngröße. Vorzugsweise handelt es sich bei den Aktivkohlepartikeln um gebrochenes Material.

In Figur 2 ist eine erste Ausführungsform des Filtermediums 12 im Detail gezeigt. Die Gerüststruktur 18 besteht aus Fadenabschnitten 22a, 22b, 22c, 22d unterschiedlicher Länge und unterschiedlicher Dicke. Einige Fadenabschnitte 22a haben an einem Ende ein freies Ende 24 und an dem anderen Ende einen Kreuzungspunkt 26. Der überwiegende Teil der Fadenabschnitte 22b, 22c, 22d hat an seinen beiden Enden jeweils einen Kreuzungspunkt 26.

An einzelnen Fadenabschnitten sind Adsorptionspartikel 20a, 20b, 20c unterschiedlicher Korngröße befestigt, wobei nicht an jedem Fadenabschnitt ein Adsorptionspartikel 20a, 20b, 20c vorhanden sein muss. An den Fadenabschnitten, an denen Adsorptionspartikel 20a, 20b, 20c vorgesehen sind, befinden sich ein oder mehrere Adsorptionspartikel 20a, 20b, 20c gleicher oder unterschiedlicher Korngröße.

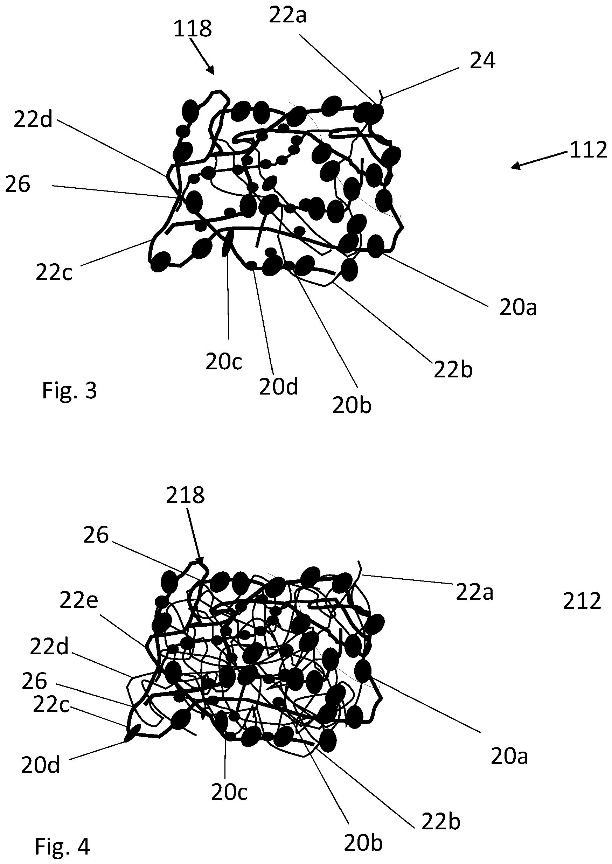

In Figur 3 ist eine zweite Ausführung eines Filtermediums 112 gezeigt, bei der im Vergleich zu der in Figur 2 dargestellten Ausführungsform die Anzahl bzw. die Konzentration der Adsorptionspartikel 20a, 20b, 20c, 20d pro Raumeinheit erhöht ist. Weiterhin ist die Anzahl unterschiedlicher Korngrößen der Adsorptionspartikel 20a, 20b, 20c, 20d erhöht.

Figur 4 zeigt eine dritte Ausführungsform eines Filtermediums 212, bei der sowohl die Anzahl bzw. die Konzentration der Adsorptionspartikel 20a, 20b, 20c, 20d pro Raumeinheit als auch die Anzahl der steifen Fadenabschnitte 22a, 22b, 22c, 22d, 22e pro Raumeinheit erhöht ist. Die in Figur 4 dargestellte Gerüststruktur 218 verfügt dadurch über sehr viele Kreuzungspunkte 26 pro Raumeinheit, insbesondere über mehr Kreuzungspunkte 26 als die in den Figuren 2 und 3 dargestellten Gerüststrukturen 18; 118. Hierdurch wird die Gerüststruktur 218 vergleichsweise stabil.

Die in Figur 2 dargestellte Ausführungsform verfügt über eine sehr große Siebweite, während die in Figur 4 dargestellte Ausführungsform nur eine geringe Siebweite aufweist. Da zusätzlich die Anzahl der Adsorptionspartikel pro Raumeinheit bei der in Fig. 2 dargestellten Ausführungsform am geringsten ist, ist die Luftdurchlässigkeit bei der in Figur 2 dargestellten Ausführungsform daher am größten.

Die in den Figuren 3 und 4 dargestellten Ausführungsformen weisen die gleiche Adsorptionsrate auf, wobei die Adsorptionsrate bei den in den Figuren 3 und 4 dargestellten Ausführungsformen größer ist als bei der in Figur 2 dargestellten Ausführungsform, da bei der in den Figuren 3 und 4 dargestellten Ausführungsformen die Menge an Adsorptionspartikeln und dadurch auch die Masse der Adsorptionspartikel pro Raumeinheit größer ist als bei der in Figur 2 dargestellten Ausführungsform.

Das in Figur 4 dargestellte Filtermedium 212 weist die stabilste Gerüststruktur auf, da diese die meisten Kreuzungspunkte 26 pro Raumeinheit aufweist.

Mit Hilfe der Siebweite und der Größe und Anzahl der Adsorptionspartikel pro Raumeinheit lassen sich der Druckverlust des Filters sowie die Adsorptionsrate des Filtermediums einstellen.

Allen Ausführungsformen ist gemeinsam, dass die Gitterstruktur 18; 118; 218 steif und selbsttragend und das Filtermedium 12; 112; 212 rüttelfest ist. Somit sind alle dargestellten Ausführungsformen eines Filtermediums 12; 112; 212 für den Einsatz als Innenraumfilter in Fahrzeugen, insbesondere landwirtschaftlichen Fahrzeugen und Baufahrzeugen geeignet.

Wenn auch nicht dargestellt, so kann auch ein Gerüst vorgesehen sein, bei dem alle Fäden die gleiche Dicke aufweisen. Auch können die Adsorptionspartikel alle die gleiche Größe aufweisen.

Anstelle der Aktivkohle kann auch anderes Adsorptionsmittel verwendet werden. Die Aktivkohle kann entsprechend vorbehandelt, insbesondere imprägniert sein.

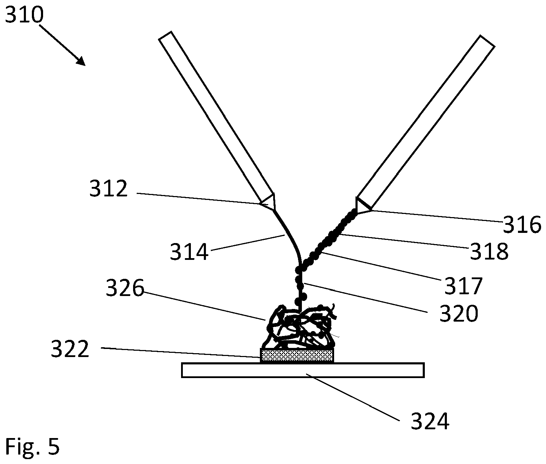

In Figur 5 ist eine Vorrichtung zur Herstellung des Filtermediums 310 gezeigt. Die Vorrichtung umfasst eine erste Düse 312, aus der Klebstoff in Form eines flüssigen Strahls 314 abgegeben wird. Weiterhin ist eine zweite Düse 316 vorhanden, aus der Adsorptionspartikel 318 aus Aktivkohle mit Hilfe eines Luftstrahls 317 herausgeblasen werden.

Die erste Düse 312 und die zweite Düse 316 sind gegenüber der Vertikalen geneigt, so dass die Öffnung der ersten Düse 312 und die Öffnung der zweiten Düse 316 zueinander weisen. Der Winkel zwischen der ersten Düse 312 und der zweiten Düse 316 ist so gewählt, dass der flüssige Klebstoffstrahl 314 sowie der Luftstrahl 317 mit den Adsorptionspartikeln 318 in einem gemeinsamen Materialstrahl 320 zusammengeführt werden. Somit haften die Adsorptionspartikel 318 an dem Klebstoffstrahl 314 an. Der aus dem Klebstoff und den Adsorptionspartikeln 318 gebildete gemeinsame Materialstrahl 320, der vorzugsweise endlos ist, trifft auf eine Abdeckung 322 aus textilem Material. Hierbei können entweder die erste Düse 312 und die zweite Düse 316 synchron gegenüber einer Arbeitsfläche, wie etwa in Art eines 3D Druckers verschiebbar sein. Beispielsweise kann ein Tisch 324 vorgesehen sein, auf dem die Arbeitsfläche ausgebildet ist und der gegenüber der ersten Düse 312 und zweiten Düse 316 in XY-Richtung beweglich ausgebildet ist, wobei die erste Düsen 312 und zweite Düse 316 in Z-Richtung verschiebbar sind. Alternativ kann der Tisch 324 und somit die Arbeitsfläche in XYZ-Richtung beweglich sein.

Der gemeinsame Strahl 320 wird ungeordnet auf der Abdeckung 322 abgelegt und härtet aus. Hierbei verklebt der gemeinsame Materialstrahl 320 mit der Abdeckung 322 und an den Kreuzungspunkten, an denen der noch flüssige gemeinsame Strahl 320 auf bereits abgelegte Strahlabschnitte trifft. Hierdurch bildet sich eine dreidimensionale Gerüststruktur 326 aus.

Sollte die Verklebung des gemeinsamen Materialstrahls 320 mit der Abdeckung 322 nicht ausreichend sein, kann auf der zur Gerüststruktur 326 weisenden Seite der Abdeckung 322 eine zusätzlich Klebeschicht aufgebracht werden.

Die Höhe der Gerüststruktur 326 und somit das Filterbett kann dadurch vergrößert werden, dass auf eine bereits vorhandene Lage einer Gerüststruktur eine weitere Lage eines flüssigen gemeinsamen Materialstrahls 320 aufgetragen wird. Beispielsweise kann das Filterbett somit eine Höhe von 10 mm bis 60 cm erreichen.

Wenn auch nicht dargestellt, so kann auf die fertige Gerüststruktur eine mit einer Klebstoffschicht versehene Filterabdeckung aufgebracht werden, so dass die Klebestoffschicht in Richtung der Gerüststruktur weist.

Bei einer nicht dargestellten Ausführungsform befindet sich die Filterabdeckung bereits in einem Filtergehäuse, wobei das Filtermedium wie oben beschrieben direkt in das Filtergehäuse eingebracht werden kann.

Bei einer nicht dargestellten Ausführungsformen sind alle fadenartigen Abschnitte oder ein Teil der fadenartigen Abschnitte elastisch.

Bei einer nicht dargestellten Ausführungsform sind ein Teil der fadenartigen Abschnitte an ihren Kontaktpunkten nicht miteinander verbunden und bilden an den Kontaktpunkten Berührungspunkte, während der andere Teil an ihren Kontaktpunkten zur Ausbildung von Kreuzungspunkten fest miteinander verbunden ist.

Im Rahmen der Erfindung ist es nicht zwingend notwendig, dass der Kleberstrahl flüssig ist. Der Kleberstrahl selbst kann auch viskos sein. Entscheidend ist, dass der Kleberstrahl Fäden bildet, die aushärten.

Im Rahmen der Erfindungen sind auch nicht dargestellte Ausführungsformen umfasst, bei denen einzelne Merkmale der dargestellten Ausführungsformen weggelassen wurden oder bei denen einzelne Merkmale der dargestellten Ausführungsformen untereinander kombiniert wurden.

## Patentansprüche

1. Filter umfassend ein Filterelement (10) mit einem Adsorptionsmittel, wobei das Filterelement (10) ein Filtermedium (12; 112, 212) umfasst, **dadurch gekennzeichnet, dass** das Filtermedium (12; 112, 212) eine luftdurchlässige, ungeordnete dreidimensional Gerüststruktur (18; 118; 218; 326) mit einer Vielzahl fadenartiger Abschnitte (22, 22a, 22b, 22c, 22d) aufweist, wobei jeder fadenartige Abschnitt (22, 22a, 22b, 22c, 22d) zwei entgegengesetzt liegende Enden aufweist und an wenigstens einem Ende über einen Kontaktpunkt verfügt, wobei das Adsorptionsmittel eine Vielzahl von Adsorptionspartikeln (20, 20a, 20b, 20c, 20d) umfasst, und wobei wenigstens eine Teilmenge der Vielzahl von Adsorptionspartikeln (20, 20a, 20b, 20c, 20d; 318) an wenigstens einem fadenartigen Abschnitt (22, 22a, 22b, 22c, 22d) im Innern der Gerüststruktur (18; 118; 218; 326) fest anhaftet.

2. Filter nach Anspruch 1, **dadurch gekennzeichnet, dass** die Gerüststruktur (18; 118; 218; 326) selbsttragend, insbesondere steif oder nur geringfügig elastisch ist.

3. Filter nach einem der vorhergehenden Ansprüche, **dadurch gekennzeichnet, dass** die Gerüststruktur (18; 118; 218; 326) wenigstens zwei fadenartige Abschnitte (22, 22a, 22b, 22c, 22d) mit jeweils einem Kontaktpunkt aufweist, wobei die wenigstens zwei fadenartige Abschnitte (22, 22a, 22b, 22c, 22d) an den Kontaktpunkten zur Ausbildung eines Knotenpunkts fest miteinander verbunden sind.

4. Filter nach einem der vorhergehenden Ansprüche, **dadurch gekennzeichnet, dass** die Gerüststruktur (18; 118; 218; 326) eine Siebweite von 0,1 µm bis 5,0 mm aufweist.

5. Filter nach einem der vorhergehenden Ansprüche, **dadurch gekennzeichnet, dass** die fadenartigen Abschnitte (22, 22a, 22b, 22c, 22d) einen Durchmesser von 5,0 mm bis 5 nm aufweisen.

6. Filter nach einem der vorhergehenden Ansprüche, **dadurch gekennzeichnet, dass** zumindest einige der Vielzahl der fadenartigen Abschnitte (22, 22a, 22b, 22c, 22d) unterschiedliche Durchmesser und/oder unterschiedliche Länge aufweisen.

7. Filter nach einem der vorhergehenden Ansprüche, **dadurch gekennzeichnet, dass** die Vielzahl der Adsorptionspartikel (20, 20a, 20b, 20c, 20d; 318) eine Vielzahl unterschiedlicher Korngrößen aufweist.

8. Filter nach einem der vorhergehenden Ansprüche, **dadurch gekennzeichnet, dass** das Adsorptionsmittel Aktivkohle ist.

9. Filter nach einem der vorhergehenden Ansprüche, **dadurch gekennzeichnet, dass** die Gerüststruktur (18; 118; 218; 326) aus einem Klebstoff hergestellt ist und die Vielzahl der Adsorptionspartikel (20, 20a, 20b, 20c, 20d; 318) an zumindest einem Teil der aus Klebstoff hergestellten Gerüststruktur (18; 118; 218; 326) anhaftet.

10. Filter nach einem der vorhergehenden Ansprüche, **dadurch gekennzeichnet, dass** wenigstens eine Filterabdeckung (14, 16; 322) vorgesehen ist, wobei die Filterabdeckung (14, 16; 322) vorzugsweise ein Filtermedium, insbesondere ein textiles Filtermedium ist.

11. Vorrichtung zur Herstellung eines Filterelements (10) geeignet für den Einsatz in einem Filter nach einem der Ansprüche 1 bis 10, umfassend eine erste Düse (312) geeignet für den Austrag von flüssigem oder viskosem Klebstoff sowie eine zweite Düse (316) geeignet für den Austrag von Adsorptionspartikeln (20, 20a, 20b, 20c, 20d; 318), wobei die erste Düse (312) und die zweite Düse (316) so unter einem Winkel ausgerichtet sind, dass der aus der ersten Düse (316) austretende flüssige oder viskose Klebstoff und die aus der zweiten Düse (316) austretenden Adsorptionspartikel (20, 20a, 20b, 20c, 20d; 318) in einen gemeinsamen Materialstrahl (320) zusammengeführt werden, sowie eine Arbeitsfläche, auf die der gemeinsame Materialstrahl (320) trifft, wobei die Arbeitsfläche und der gemeinsame Materialstrahl (320) gegeneinander verschiebbar sind.

12. Verfahren zur Herstellung eines Filterelements (10) eines Filters nach einem der Ansprüche 1 bis 10, **dadurch gekennzeichnet, dass** ein erster Strahl (314) aus einem flüssigen oder viskosem Klebstoff erzeugt wird und dass ein zweiter Strahl (317) mit Adsorptionspartikeln (20, 20a, 20b, 20c, 20d; 318) erzeugt wird, wobei der erste Strahl (314) aus flüssigem oder viskosem Klebstoff und der zweite Strahl (317) mit den Adsorptionspartikeln (20, 20a, 20b, 20c, 20d; 318) in einem gemeinsamen Materialstrahl (320) zusammengeführt werden und der gemeinsame Materialstrahl (320) zumindest einen fadenartigen Abschnitt (22, 22a, 22b, 22c, 22d) bildet, der aushärtet und an dem Adsorptionspartikel (20, 20a, 20b, 20c, 20d; 318) anhaften.

13. Verfahren nach Anspruch 12, **dadurch gekennzeichnet, dass** der aus flüssigem oder viskosem Klebstoff und Adsorptionspartikeln (20, 20a, 20b, 20c, 20d; 318) gebildete gemeinsame Materialstrahl (320) ungeordnet auf einer vorgegebenen Arbeitsfläche abgelegt wird.

14. Verfahren nach Anspruch 12 oder 13, **dadurch gekennzeichnet, dass** die Gerüststruktur (18; 118; 218; 326) schichtweise gebildet wird, wobei vorzugsweise mehrere Ebenen gebildet werden.

15. Verfahren nach einem der Ansprüche 12 bis 14, **dadurch gekennzeichnet, dass** eine Filterabdeckung (324) vorgesehen ist, auf die der gemeinsame Materialstrahl (320) aus flüssigem oder viskosem Klebstoff und Adsorptionspartikeln (20, 20a, 20b, 20c, 20d; 318) auftrifft, wobei vorzugsweise vor dem Auftreffen des gemeinsamen Materialstrahl (320) aus flüssigem oder viskosem Klebstoff und Adsorptionspartikeln (20, 20a, 20b, 20c, 20d; 318) die Filterabdeckung (324) mit einer Klebestoffschicht versehen wird.

16. Verfahren nach einem der Ansprüche 12 bis 15, **dadurch gekennzeichnet, dass** eine Filterabdeckung mit einer Klebstoffschicht auf ihrer Unterseite vorgesehen ist, die auf die oberste Ebene der Gerüststruktur (18; 118; 218; 326) aufgelegt wird.

## Geänderte Patentansprüche

### Geänderte Patentansprüche gemäss Regel 137(2) EPÜ.

1. Filter umfassend ein Filterelement (10) mit einem Adsorptionsmittel, wobei das Filterelement (10) ein Filtermedium (12; 112, 212) umfasst, **dadurch gekennzeichnet, dass** das Filtermedium (12; 112, 212) eine luftdurchlässige, ungeordnete dreidimensional Gerüststruktur (18; 118; 218; 326) mit einer Vielzahl fadenartiger Abschnitte (22, 22a, 22b, 22c, 22d) aufweist, wobei jeder fadenartige Abschnitt (22, 22a, 22b, 22c, 22d) zwei entgegengesetzt liegende Enden aufweist und an wenigstens einem Ende über einen Kontaktpunkt verfügt, wobei das Adsorptionsmittel eine Vielzahl von Adsorptionspartikeln (20, 20a, 20b, 20c, 20d) umfasst, wobei wenigstens eine Teilmenge der Vielzahl von Adsorptionspartikeln (20, 20a, 20b, 20c, 20d; 318) an wenigstens einem fadenartigen Abschnitt (22, 22a, 22b, 22c, 22d) im Innern der Gerüststruktur (18; 118; 218; 326) fest anhaftet und wobei die Gerüststruktur (18; 118; 218; 326) selbsttragend ist.

2. Filter nach Anspruch 1, **dadurch gekennzeichnet, dass** die Gerüststruktur (18; 118; 218; 326) steif oder nur geringfügig elastisch ist.

3. Filter nach einem der vorhergehenden Ansprüche, **dadurch gekennzeichnet, dass** die Gerüststruktur (18; 118; 218; 326) wenigstens zwei fadenartige Abschnitte (22, 22a, 22b, 22c, 22d) mit jeweils einem Kontaktpunkt aufweist, wobei die wenigstens zwei fadenartige Abschnitte (22, 22a, 22b, 22c, 22d) an den Kontaktpunkten zur Ausbildung eines Knotenpunkts fest miteinander verbunden sind.

4. Filter nach einem der vorhergehenden Ansprüche, **dadurch gekennzeichnet, dass** die Gerüststruktur (18; 118; 218; 326) eine Siebweite von 0,1 µm bis 5,0 mm aufweist.

5. Filter nach einem der vorhergehenden Ansprüche, **dadurch gekennzeichnet, dass** die fadenartigen Abschnitte (22, 22a, 22b, 22c, 22d) einen Durchmesser von 5,0 mm bis 5 nm aufweisen.

6. Filter nach einem der vorhergehenden Ansprüche, **dadurch gekennzeichnet, dass** zumindest einige der Vielzahl der fadenartigen Abschnitte (22, 22a, 22b, 22c, 22d) unterschiedliche Durchmesser und/oder unterschiedliche Länge aufweisen.

7. Filter nach einem der vorhergehenden Ansprüche, **dadurch gekennzeichnet, dass** die Vielzahl der Adsorptionspartikel (20, 20a, 20b, 20c, 20d; 318) eine Vielzahl unterschiedlicher Korngrößen aufweist.

8. Filter nach einem der vorhergehenden Ansprüche, **dadurch gekennzeichnet, dass** das Adsorptionsmittel Aktivkohle ist.

9. Filter nach einem der vorhergehenden Ansprüche, **dadurch gekennzeichnet, dass** die Gerüststruktur (18; 118; 218; 326) aus einem Klebstoff hergestellt ist und die Vielzahl der Adsorptionspartikel (20, 20a, 20b, 20c, 20d; 318) an zumindest einem Teil der aus Klebstoff hergestellten Gerüststruktur (18; 118; 218; 326) anhaftet.

10. Filter nach einem der vorhergehenden Ansprüche, **dadurch gekennzeichnet, dass** wenigstens eine Filterabdeckung (14, 16; 322) vorgesehen ist, wobei die Filterabdeckung (14, 16; 322) vorzugsweise ein Filtermedium, insbesondere ein textiles Filtermedium ist.

11. Verfahren zur Herstellung eines Filterelements (10) eines Filters nach einem der Ansprüche 1 bis 10, **dadurch gekennzeichnet, dass** ein erster Strahl (314) aus einem flüssigen oder viskosem Klebstoff erzeugt wird und dass ein zweiter Strahl (317) mit Adsorptionspartikeln (20, 20a, 20b, 20c, 20d; 318) erzeugt wird, wobei der erste Strahl (314) aus flüssigem oder viskosem Klebstoff und der zweite Strahl (317) mit den Adsorptionspartikeln (20, 20a, 20b, 20c, 20d; 318) in einem gemeinsamen Materialstrahl (320) zusammengeführt werden und der gemeinsame Materialstrahl (320) zumindest einen fadenartigen Abschnitt (22, 22a, 22b, 22c, 22d) bildet, der aushärtet und an dem Adsorptionspartikel (20, 20a, 20b, 20c, 20d; 318) anhaften.

12. Verfahren nach Anspruch 11, **dadurch gekennzeichnet, dass** der aus flüssigem oder viskosem Klebstoff und Adsorptionspartikeln (20, 20a, 20b, 20c, 20d; 318) gebildete gemeinsame Materialstrahl (320) ungeordnet auf einer vorgegebenen Arbeitsfläche abgelegt wird.

13. Verfahren nach Anspruch 11 oder 12, **dadurch gekennzeichnet, dass** die Gerüststruktur (18; 118; 218; 326) schichtweise gebildet wird, wobei vorzugsweise mehrere Ebenen gebildet werden.

14. Verfahren nach einem der Ansprüche 11 bis 13, **dadurch gekennzeichnet, dass** eine Filterabdeckung (324) vorgesehen ist, auf die der gemeinsame Materialstrahl (320) aus flüssigem oder viskosem Klebstoff und Adsorptionspartikeln (20, 20a, 20b, 20c, 20d; 318) auftrifft, wobei vorzugsweise vor dem Auftreffen des gemeinsamen Materialstrahl (320) aus flüssigem oder viskosem Klebstoff und Adsorptionspartikeln (20, 20a, 20b, 20c, 20d; 318) die Filterabdeckung (324) mit einer Klebestoffschicht versehen wird.

15. Verfahren nach einem der Ansprüche 11 bis 14, **dadurch gekennzeichnet, dass** eine Filterabdeckung mit einer Klebstoffschicht auf ihrer Unterseite vorgesehen ist, die auf die oberste Ebene der Gerüststruktur (18; 118; 218; 326) aufgelegt wird.
